(19) **Europäisches Patentamt / European Patent Office / Office européen des brevets**

(11) **EP 1 602 969 B1**

(12) **EUROPEAN PATENT SPECIFICATION**

(45) Date of publication and mention
of the grant of the patent:
**29.04.2009 Bulletin 2009/18**

(51) Int Cl.:
***G03B 15/03*** *(2006.01)* ***G03B 15/05*** *(2006.01)*
*G03B 33/06* *(2006.01)*

(21) Application number: **05104357.8**

(22) Date of filing: **23.05.2005**

(54) **Illumination device for photographing and camera system**

Beleuchtungssystem zum Fotografieren und Kamerasystem

Dispositif d'illumination pour photographier et système de caméra

(84) Designated Contracting States:
**DE FR GB**

(30) Priority: **25.05.2004 JP 2004154997**

(43) Date of publication of application:
**07.12.2005 Bulletin 2005/49**

(73) Proprietor: **NIKON CORPORATION**
**Tokyo 100-8331 (JP)**

(72) Inventors:
• **Hoshuyama, Hideo**
**Chiyoda-ku, Tokyo 100-8331 (JP)**
• **Shibazaki, Kiyoshige**
**Chiyoda-ku, Tokyo 100-8331 (JP)**

(74) Representative: **Walaski, Jan Filip et al**
**Venner Shipley LLP**
**20 Little Britain**
**London EC1A 7DH (GB)**

(56) References cited:
**EP-A- 1 176 849       DE-A1- 10 147 235**
**US-A- 5 895 128       US-A1- 2004 090 550**

• **PATENT ABSTRACTS OF JAPAN vol. 2003, no. 10, 8 October 2003 (2003-10-08) & JP 2003 163940 A (SEIKO EPSON CORP), 6 June 2003 (2003-06-06)**

**Description**

The present invention relates to an illumination device for a camera, which illuminates a subject during a photographing operation.

United States Patent 5,895,128, corresponding to JP-A-10-206942, discloses an illumination device for a camera, which is used to illuminate a subject during a photographing operation, which includes a plurality of light sources. The illumination device disclosed in the publication includes an LED that emits red light, an LED that emits green light, and an LED that emits blue light, so as to enable correction of the color temperature of flash light emitted from a discharge-type light source such as a xenon lamp. The red LED, green LED and blue LED are controlled so that either or all of them are turned on in correspondence to the extent to which the color temperature needs to be corrected.

While the color temperature of a photographic image can be adjusted with the illumination device disclosed in the publication, the saturation of the image cannot be adjusted. Accordingly, the saturation of the photographic image needs to be improved by obtaining image-capturing signals having undergone color separation through a spectral filter or the like on the camera side and then executing image processing (e.g., decompression processing for improving the gradation of each color) on the image-capturing signals having undergone the color separation in order to improve the saturation. During such image processing, the noise component contained in the image-capturing signals, too, is bound to become decompressed through the decompression processing to result inloss of image quality.

European Patent Application EP 1,176,849 describes an illumination device for a camera in which a colour temperature can be freely adjusted though LEDs of two or three colours.

German Patent Application DE 101,47,235 discloses a camera illumination device utilizing a plurality of LEDs to improve efficiency.

Japanese Patent Application JP 2003-163940, corresponding to US 2004/0090550 A, discloses a digital camera in which a colour filters are allocated to areas of an image sensor in a time-sharing manner.

According to an aspect of the present invention, there is provided a camera system according to claim 1.

According to said aspect, the camera system comprising an illumination device including a three-wavelength light source that emits light having three maximum light emission wavelengths in separate wavelength ranges each corresponding to a wavelength of one of three primary colors of light.

It is preferable that the light emitted from the three-wavelength light source is defined so as a ratio of a light intensity level corresponding to each of the three maximum light emission wavelengths to a light intensity level corresponding to a minimum light emission wavelength present between each of the three maximum light emission wavelengths and adjacent to the corresponding maximum light emission wavelength to be equal to or greater than a predetermined value.

The three-wavelength light source may be constituted with a white LED. The three-wavelength light source may be constituted with two or three LEDs each generating at least one of the wavelengths of the three primary colors of light.

It is preferable that the three maximum light emission wavelengths each match a maximum transmission wavelength corresponding to one of the three primary colors at a spectral filter disposed at an image-capturing device of a camera.

A light source different from the three-wavelength light source, that emits light which is not separated in the wavelength ranges; and a light source switching means for selectively switching to one of the three-wavelength light source and the light source that emits the light not separated in the wavelength ranges may also be provided.

A camera system according to the present invention includes the illumination device and an electronic camera comprising a spectral filter for the three primary colors with maximum transmission wavelengths matching the three maximum light emission wavelengths and an image-capturing means for capturing a subject image via the spectral filter.

BRIEF DESCRIPTION OF THE DRAWINGS

FIG. 1 shows an electronic camera system achieved in an embodiment of the present invention;
FIG. 2 is a block diagram showing the essential structure adopted in the electronic camera system;
FIG. 3 presents an example of structures that may be adopted in an LED and light emission circuit;
FIG. 4 shows the spectral radiance characteristics of illuminating light generated at the LED;
FIG. 5 shows the spectral sensitivity characteristics of an image-capturing element;
FIG. 6 shows the light receiving characteristics manifesting when LED light is received at the image-capturing element;
FIG. 7 is a block diagram showing the essential structure adopted in an electronic camera system having a red LED, green LED and blue LED;

FIG. 8 is a block diagram showing the essential structure adopted in an electronic camera system having an LED and a xenon lamp; and

FIG. 9 shows the spectral radiance characteristics of illuminating light emitted from a xenon lamp.

DESCRIPTION OF PREFERRED EMBODIMENT

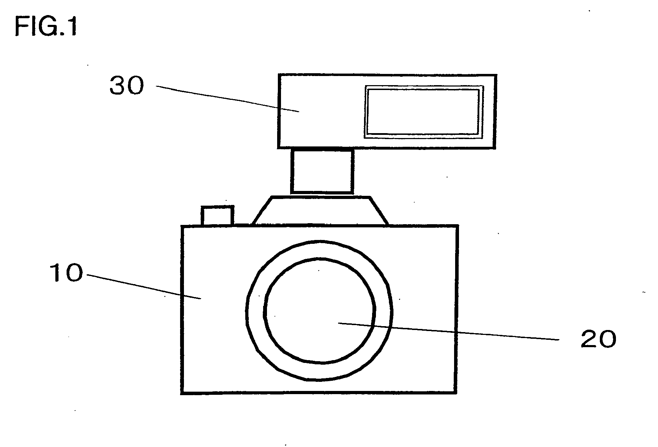

The following is an explanation of the best mode for carrying out the invention, given in reference to the drawings. FIG. 1 shows an electronic camera system achieved in an embodiment of the present invention. FIG. 1 shows an interchangeable photographic lens 20 mounted at an electronic camera body 10. In addition, an illumination device 30 is mounted at an accessory shoe (not shown) of the electronic camera 10.

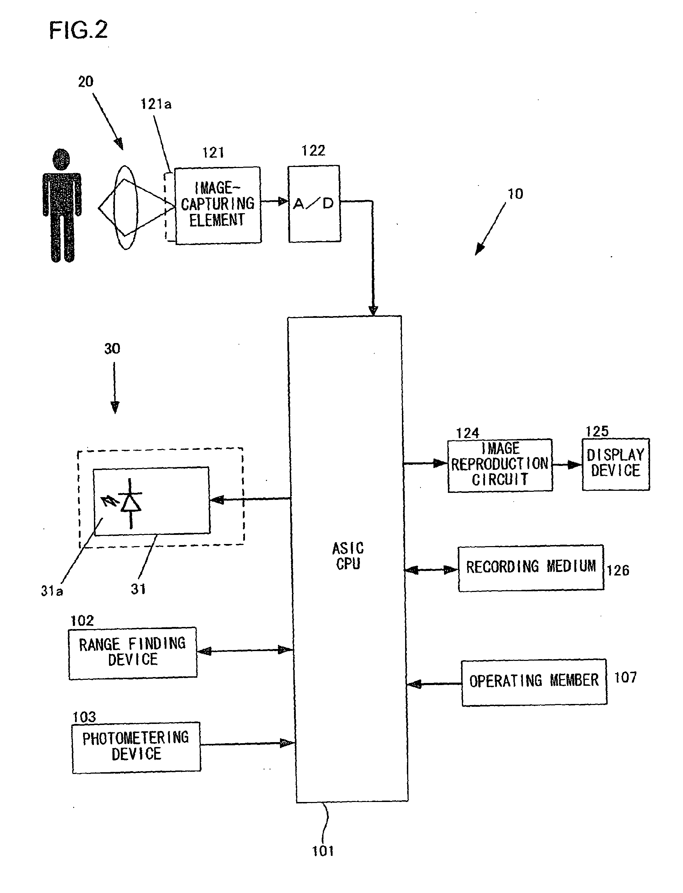

FIG. 2 is a block diagram of the essential structure adopted in the electronic camera system shown in FIG. 1. As shown in FIG. 2, the illumination device 30, which includes an LED 31a and a light emission circuit 31 provided in conjunction with the LED 31a, is mounted at the camera body 10. The illumination device 30 engages in communication with a CPU 101 disposed at the camera body 10 via a communication contact point (not shown) located at the accessory shoe to receive timing signals provided as instructions for the LED 31a to start and end a light emission, a signal indicating the light output to be achieved and the like.

The CPU 101 at the camera body 10 may be constituted with, for instance, an ASIC. The CPU 101 executes specific arithmetic operations by using signals input thereto from various blocks to be detailed later and outputs control signals generated based upon the results of the arithmetic operations to the individual blocks.

A subject light flux having passed through the photographic lens 20 and then entered the camera body 10 is guided to an image-capturing element 121. The image-capturing element 121 is constituted with a CCD image sensor or the like. The image-capturing element 121 captures an image formed with the subject light flux and outputs image-capturing signals to an A/D conversion circuit 122. The A/D conversion circuit 122 converts the analog image-capturing signals to digital signals.

The CPU 101, which executes image processing such as white balance processing on the image data resulting from the digital conversion, also executes compression processing for compressing the image data having undergone the image processing in a specific format, decompression processing for decompressing compressed image data and the like. A recording medium 126 may be constituted with a memory card that can be detachably loaded into the electronic camera body 10. Image data having undergone the image processing are recorded into the recording medium 126.

An image reproduction circuit 124 generates data for reproduced image display by using uncompressed image data (image data that have not been compressed or decompressed image data) . At a display device 125 that may be constituted with, for instance, a liquid crystal display monitor, an image is displayed by using the reproduced image display data.

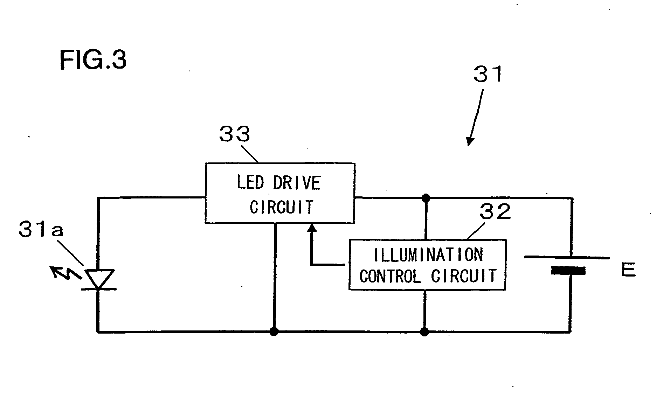

The light emission circuit 31 turns on the LED 31a in response to a light emission instruction output by the CPU 101. FIG. 3 presents an example of structures thatmaybe adopted in the LED 31a and the light emission circuit 31. Signals indicating the timing with which the LED 31a is to start and end a light emission and the quantity of light to be emitted at the LED 31a are input to an illumination control circuit 32 from the CPU 101 in the camera body 10. As is known in the related art, an LED is a current controlled device in which a proportional relationship exists between the drive current and the light emission intensity (light power) within its rated range. The illumination control circuit 32 determines the value of the current to be supplied to the LED 31a based upon the contents of an instruction provided by the CPU 101 and outputs a command for an LED drive circuit 33 to supply an electric current achieving this current value to the LED 31a. The quantity of light emitted at the LED 31a is thus controlled.

Data indicating the relationship between the light emission intensity and the supplied electric current manifesting at the LED 31a are stored in a nonvolatile memory within the illumination control circuit 32 as a table prepared in advance based upon the results of actual measurement. The illumination control circuit 32 looks up the table by using the light emission intensity as an argument, determines the value of the required electric current to be supplied and indicates the current value to the LED drive circuit 33. In response to the command output from the illumination control circuit 32, the LED drive circuit 33 supplies the required current to the LED 31a. It is to be noted that a battery E constitutes a power source for the illumination control circuit 32 and the LED drive circuit 33.

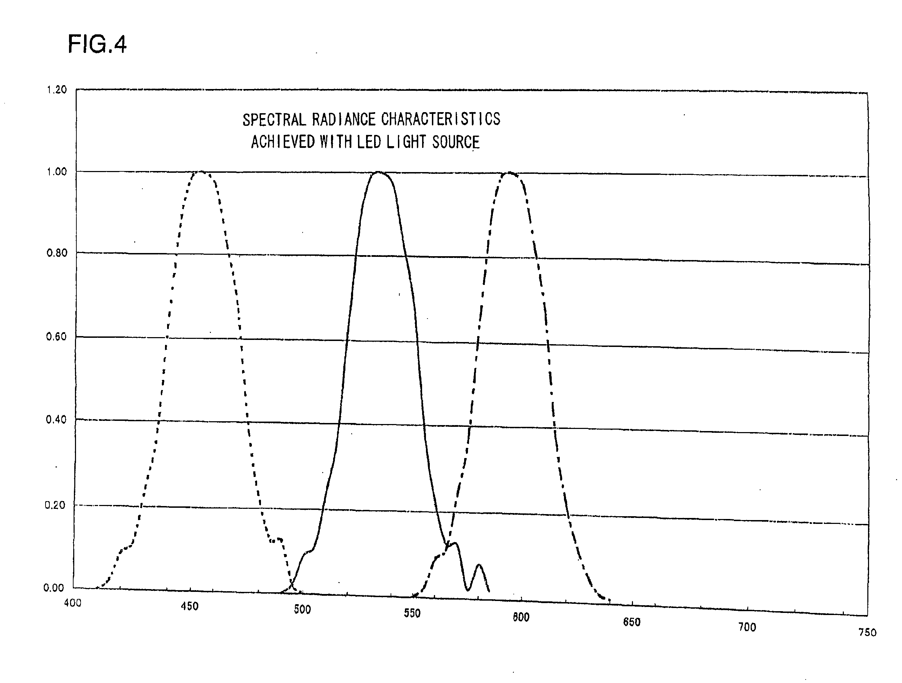

The LED 31a is a white LED. FIG. 4 shows the spectral radiance characteristics of illuminating light generated at the LED 31a. The horizontal axis in FIG. 4 represents the light emission (radiation) wavelength (unit: nm), whereas the vertical axis in FIG. 4 represents the light emission (radiation) brightness. The vertical axis is scaled with relative values indicating the light emission brightness with the value 1 representing the maximum light emission brightness level. The LED 31a is a trichromatic (three-wavelength) light source achieving maximum light emission wavelengths in separate wavelength ranges, each corresponding to one of the three primary colors of blue, green and red. Among the waveforms corresponding to the three peaks in FIG. 4, the waveform indicated with the dotted line corresponds to the blue, the waveform indicated with the solid line corresponds to the green and the waveform indicated with the one-point chain line corresponds to the red.

In order to simplify the explanation, an example where the three maximum values of the light emission brightness achieved with the LED 31a are all equal is given. The crucial feature of the embodiment is that the ratios of the three maximum values of the light emission brightness and the minimum values existing between the maximum values are never less than a predetermined value (e.g., 10:1), rather than that light is emitted at the LED 31a with equal brightness levels in correspondence to the three primary color wavelengths.

A range finding device 102 in FIG. 2 detects the state of the focal point position adjustment achieved with the photographic lens 20 and outputs a detection signal to the CPU 101. In response to the focal point detection signal, the CPU 101 transmits a command for a focus lens drive mechanism (not shown) to drive forward/backward a focus lens (not shown) included in the photographic lens 20 along the optical axis, so as to adjust the focal point position achieved with the photographic lens 20. The focal point adjustment information corresponds to distance information indicating the distance to the main subject.

A photometering device 103 detects the quantity of the subject light and outputs a detection signal to the CPU 101. Using this detection signal, the CPU 101 calculates a subject brightness BV.

When the illumination device 30 is set in a light emission-enabled state, the CPU 101 executes exposure calculation as expressed in (1) below by using a current aperture value setting AV, a current shutter speed TV, the calculated subject brightness BV and an image-capturing sensitivity SV which is currently set.

$$EV = AV + TV = BV + SV \ ... \ (1)$$

EV in the expression represents the exposure quantity. The CPU 101 determines through an arithmetic operation control exposure that includes the quantity of light to be emitted from the illumination device 30 in correspondence to an exposure deviation $\Delta EV$, so as to achieve optimal exposure. The exposure deviation $\Delta EV$ represents the difference between the control exposure and the optimal exposure. The quantity of light to be emitted is adjusted in conformance to the distance information indicating the distance to the main subject.

An operatingmember 107, which includes a shutter release switch interlocking with an operation of a shutter release button (not shown), a zoom switch (not shown) and a photographing mode selector switch (not shown), outputs operation signals corresponding to the individual switches to the CPU 101. As the "photographing mode", a portrait photographing mode for photographing a person or a still life photographing mode for photographing a subject other than a person, for instance, may be selected in this example. The portrait photographing mode is selected to achieve a highly saturated image, and is particularly suited when the color of human skin needs to be reproduced pleasingly.

The present invention is characterized by the spectral radiance characteristics of the illuminating light generated at the illumination device 30 which constitutes part of the electronic camera system described above.

As an operation signal indicating the portrait photographing mode setting is input thereto from the operating member 107, the CPU 101 enables the illumination device 30 to emit light. As a shutter release operation is performed with the electronic camera 10 in this state, the CPU 101 outputs a light emission command for the illumination device 30 to emit light of the calculated light quantity during the photographing operation over a predetermined length of time. The main subject is thus illuminated with the illuminating light provided by the LED 31a.

A spectral filter (color filter) 121a in the related art is disposed over the pixel area formed at the image-capturing surface of the image-capturing element 121 (see FIG. 2) described earlier. The color filter 121a is a color separation filter constituted with primary color filters each allowing red (R) color light, blue (B) color light or green (G) color light to pass through and each assuming a position corresponding to a given pixel position in a specific array (e.g., the Bayer array). By capturing a subject image through this color filter 121a, the image-capturing element 121 outputs image-capturing signals each corresponding to one of the three primary colors of light.

The CPU 101 executes a white balance adjustment by adjusting the signal ratios among the three primary colors to achieve predetermined values. Namely, it multiplies the image data corresponding to the red light and the image data corresponding to the blue light among the digitized image data corresponding to the red light, the blue light and the green light respectively by an R gain and a B gain determined for the purpose of white balance adjustment. Values stored in advance in the CPU 101, for instance, may be used as the R gain and the B gain for the white balance adjustment.

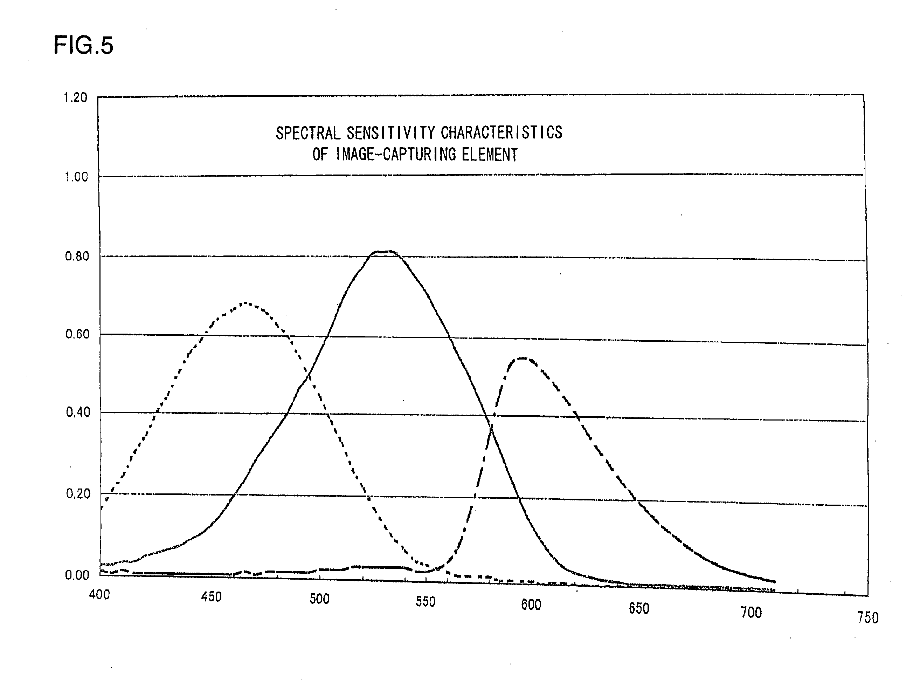

The maximum light emission wavelengths of the LED 31a mentioned earlier are set so as to match the maximum transmission wavelengths achieved through the spectral transmission characteristics of the color filter 121a disposed at the image-capturing element 121. FIG. 5 shows the spectral sensitivity characteristics of the image-capturing element 121. In the spectral sensitivity characteristics shown in the figure, the spectral transmission characteristics of the color filter 121a, the wavelength sensitivity characteristics of the photodiodes constituting the pixels at the image-capturing element 121 and the infrared light blocking characteristics of an infrared light blocking filter (not shown) disposed at the image-capturing surface of the image-capturing element 121 as a member independent of the color filter 121a are incorporated.

The horizontal axis in FIG. 5 represents the wavelength of the received light (unit: nm) and the vertical axis represents the light receiving sensitivity. The vertical axis is scaled with values taken relative to the signal value of 1 output from the photodiodes when the transmittance of the filters and the like is 100%. Among the waveforms corresponding to the three peaks in FIG. 5, the waveform indicated with the dotted line represents the sensitivity characteristics of the received blue light, the waveform indicated with the solid line represents the sensitivity characteristics of the received green light and the waveform indicated with the one-point chain line represents the sensitivity characteristics of the received red light.

FIG. 5 indicates that light in an intermediate color between blue and green (with a wavelength of approximately 490nm) is received as blue light and also as green light at the image-capturing element 121. As a result, the signal values corresponding to the intermediate colors become large relative to the signal values of the three primary colors (the signal values corresponding to the blue and the green in this example), which lowers the saturation of the image.

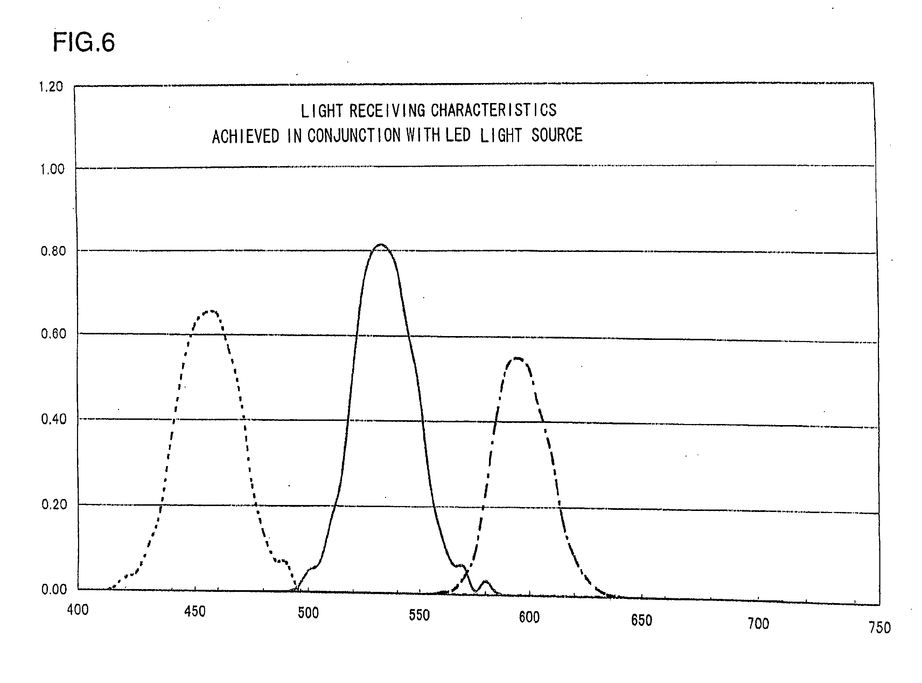

As the main subject is illuminated by turning on the LED 31a during the photographing operation, the intensity levels of the color components in the subject light flux which correspond to the maximum light emission wavelengths at the LED 31a increases. FIG. 6 shows the light receiving characteristics manifesting when the illuminating light emitted from the LED 31a is received at the image-capturing element 121 achieving the spectral sensitivity characteristics shown in FIG. 5. The horizontal axis in FIG. 6 represents the received light wavelength, whereas the vertical axis in FIG. 6 represents the light receiving sensitivity. The vertical axis is scaled as in FIG. 5. Among the waveforms corresponding to the three peaks in FIG. 6, the waveform indicated with the dotted line represents the blue light receiving characteristics, the waveform indicated with the solid line represents the green light receiving characteristics and the waveform indicated with the one-point chain line represents the red light receiving characteristics.

FIG. 6 indicates that since light in the intermediate color (with the wavelength of approximately 490nm) between blue and green is not received at the image-capturing element 121, a signal value corresponding to the intermediate color becomes smaller relative to the individual signal values corresponding to the primary colors (the blue and the green in this example) and thus, the saturation in the image improves.

Likewise, since light in the intermediate color (with the wavelength of approximately 570nm) between green and red is not received at the image-capturing element 121, a signal value corresponding to the intermediate color becomes smaller relative to the individual signal values corresponding to the primary colors (the green and the red in this example) and thus, the saturation in the image improves.

The following advantageous effects can be achieved in the embodiment described above.

(1) The LED 31a, which is a trichromatic (three-wavelength) light source achieving maximum light emission wavelengths in separate wavelength ranges each corresponding to one of the three primary colors of light, i.e., blue, green and red, is included as the light source at the illuminating device 30. In response to a shutter release operation performed while the electronic camera 10 is set in the portrait photographing mode, the electronic camera 10 outputs a light emission command for the illumination device 30 to illuminate the main subject with illuminating light from the LED 31a. As a result, the three primary color components of the light contained in the subject light flux are emphasized compared to the state in which the subject is not illuminated with illuminating light from the LED 31a, so as to achieve a highly saturated image by reproducing, in particular, the skin color of the subject or the like in a pleasing manner.

Since a highly saturated image is achieved by irradiating the subject with the illuminating light from the LED 31a without executing any additional processing apart from the image processing in the related art, the embodiment allows the illumination device 30 according to the present invention to be used in conjunction with an electronic camera in the related art. In addition, since the decompression processing executed in the related art to improve the saturation (processing for boosting the individual signal values corresponding to the three primary colors of light to improve the gradation) does not need to be executed when adjusting the signal ratios of the individual image-capturing signals corresponding to the three primary colors of light having undergone color separation at the color filter 121a on the image-capturing element 121, any degradation in the image quality attributable to the decompression processing, which is bound to increase the noise component contained in the image-capturing signals, does not occur.

(2) Since the maximum light emission wavelengths at the LED 31a are set so as to match the respective maximum transmission wavelengths achieved through the spectral transmission characteristics at the color filter 121a disposed at the image-capturing element 121, the light corresponding to the three primary color components is received at the image-capturing element 121 with a high degree of efficiency. With the efficiency with which the three primary color components are collected thus improved, the signal levels of the image-capturing signals are enhanced to achieve an image with a desirable S/N ratio. In addition, since the LED 31a does not need to emit light with an excessively high brightness level, the power consumption at the illumination device 30 is reduced.

While the illumination device 30 having the LED 31a is mounted as an external unit in the explanation provided above, the illumination device may instead be built into the camera body.

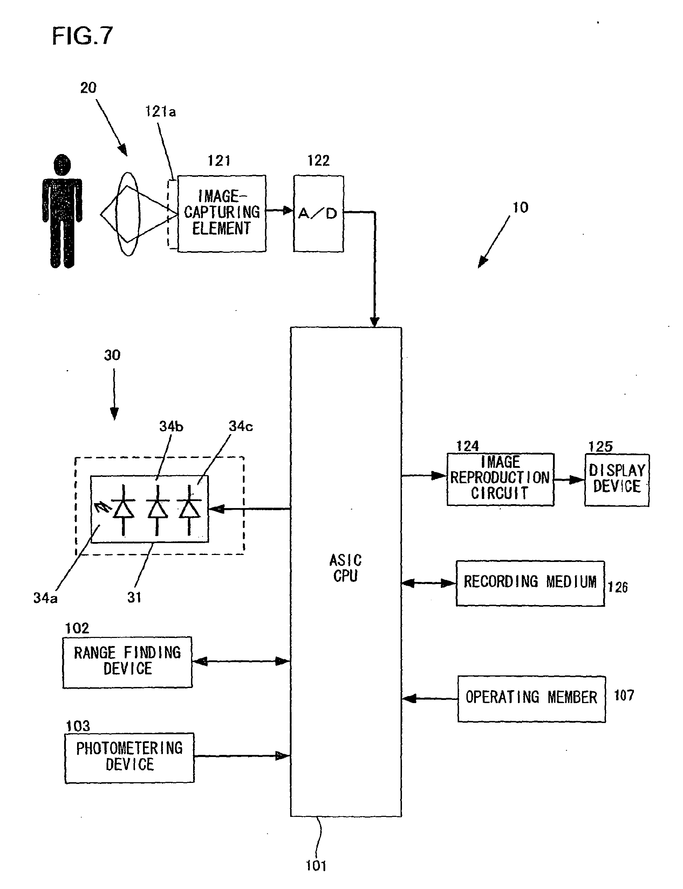

While the LED 31a is constituted with a white LED, a red LED 34a, a green LED 34b and a blue LED 34c may be provided independently of one another to illuminate the main subject by combining the illuminating light fluxes emitted from the individual LEDs as shown in FIG. 7.

Alternatively, an LED that emits red light and green light and an LED that emits blue light may be provided independently of each other so as to illuminate the main subj ect by combining the illuminating light fluxes emitted from these LEDs.

Likewise, an LED that emits blue light and green light and an LED that emits red light may be provided independently of each other so as to illuminate the main subject by combining the illuminating light fluxes emitted from these LEDs.

While a single white LED is utilized in the explanation provided above, a plurality of white LEDs may be used instead to emit light at the same time so as to increase the light emission brightness level and the main subject may be illuminated with illuminating light achieved by combining light fluxes emitted from these LEDs.

It is to be noted that in the structure having a red LED, a green LED and a blue LED instead of a white LED or in the structure that includes an LED capable of emitting two different colors of light among red light, green light and blue light, a plurality of LEDs may be utilized so as to increase the light emission brightness levels when illuminating the main subject.

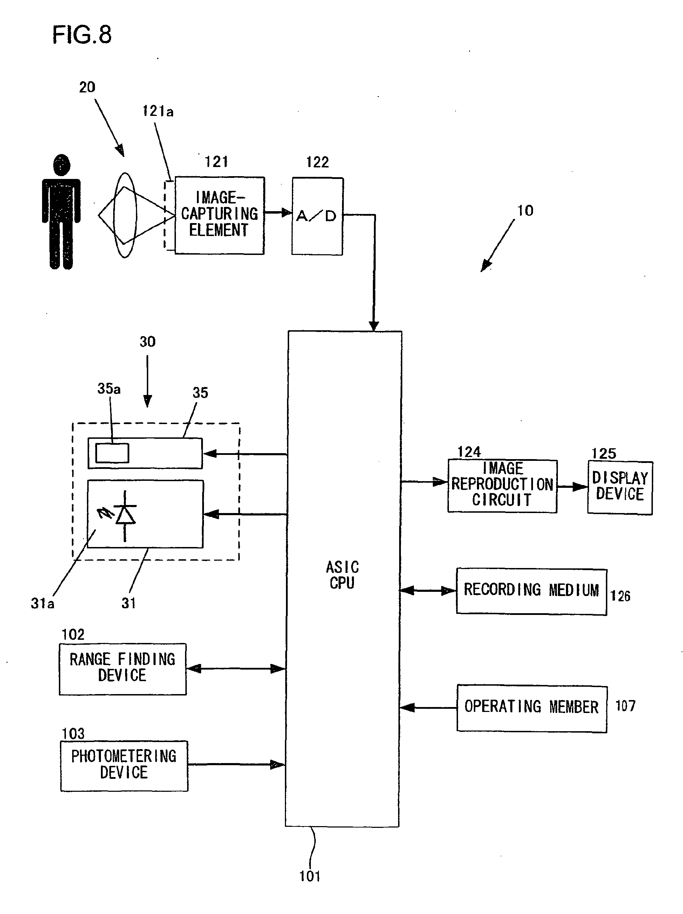

As shown in FIG. 8, the illumination device 30 may further include another light source (e.g., a xenon lamp) 35a achieving light emission brightness characteristics different from those of the white LED 31a and the white LED 31a or the xenon lamp 35a may be selected as the illuminating light source. The xenon lamp 35a is controlled through a light emission circuit 35 to turn on in response to a light emission instruction outputted from the CPU 101. In such a structure, as an operation signal indicating the still life photographing mode setting is input from the operating member 107, the CPU 101 enables the xenon lamp 35a at the illumination device 30 to emit light. As a shutter release operation is performed at the electronic camera 10 in this state, the CPU 101 outputs a light emission command for the illumination device 30 to emit light of the light quantity having been calculated as described earlier. As a result, the main subject is illuminated with the illuminating light provided by the xenon lamp 35a.

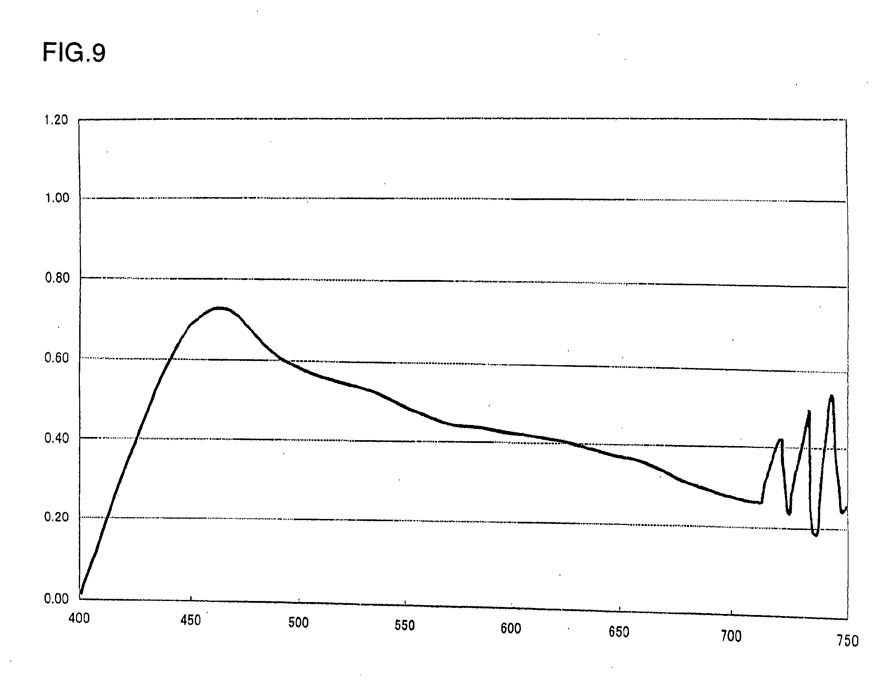

FIG. 9 shows the spectral radiance characteristics of the illuminating light provided by the xenon lamp 35a. The horizontal axis in FIG. 9 represents the light emission (radiation) wavelength, whereas the vertical axis in FIG. 9 represents the light emission (radiation) brightness. The vertical axis is scaled with relative values indicating the light emission brightness with the value 1 representing the maximum light emission brightness level achieved when the xenon lamp 35a executes the full light emission. The light emission characteristics of the xenon lamp 35a differ from those of the LED 31a in that it does not emit light in separate wavelengths in correspondence to the three primary colors of light, blue, green and red. Namely, the xenon lamp 35a can be called a light source that emits light not separated in separate wavelength ranges.

By illuminating the main subject with the illuminating light emitted from the xenon lamp 35a in the still life photographing mode, an image in which the three primary color components of light are not emphasized is obtained. By selectively using the illuminating light best suited for specific photographic purposes, an image achieving the level of saturation desired by the photographer can be obtained. In such a case, the CPU 101 functions as a light source switching means.

It is to be noted that as long as the functions characterizing the present invention are not compromised, components other than those described above may be used.

According to the embodiment of the present invention, in which the subject is illuminated to improve the saturation of an image photographed with the camera, a highly saturated image can be obtained without resulting in degradation of the image quality.

The above described embodiments are examples, and various modifications can be made without departing from the scope of the invention as defined by the claims.

**Claims**

1. A camera system comprising an image-capturing device (121), a spectral filter (121a) disposed at the image-capturing device, and an illumination device (30) comprising a three-wavelength light source (31a) arranged to emit light having three maximum light emission wavelengths in separate wavelength ranges each corresponding to a wavelength of one of three primary colours of light;
wherein the three-wavelength light source (31a) is configured such that said three maximum light emission wavelengths each match as a corresponding maximum transmission wavelength of one of the three primary colours of the spectral filter (121 a).

**2.** A camera system according to claim 1, wherein the light emitted from the three-wavelength light source (31 a) is defined so that a ratio of a light intensity level corresponding to each of the three maximum light emission wavelengths to a light intensity level corresponding to a minimum light emission wavelength present between each of the three maximum light emission wavelengths and adjacent to the corresponding maximum light emission wavelength to be equal to or greater than a predetermined value.

**3.** A camera system according to claim 2, wherein the three-wavelength light source (31a) is a white LED.

**4.** A camera system according to claim 2, wherein the three-wavelength light source (31 a) is two or three LEDs (34a, 34b, 34c) each generating at least one of the wavelengths of the three primary colours of light.

**5.** A camera system according to any one of claims 1 to 4, further comprising:

a light source (35a) different from the three-wavelength light source (31 a), arranged to emit light which does not have separated wavelength ranges; and
a light source switching means (101) for selectively switching to one of the three-wavelength light source (31a) and the light source (35a) that emits the light which does not have separated wavelength ranges.

**6.** A camera system according to any one of the preceding claims in which the illumination device (30) is detachable from the image-capturing device (121) and the spectral filter (121a).

**7.** A camera system according to any one of claims 1 to 5 in which the illumination device (30), the image-capturing device (121) and the spectral filter (121a) are an integrated unit.

**Patentansprüche**

**1.** Kamerasystem, umfassend eine Bilderfassungsvorrichtung (121), einen Spektralfilter (121a), der an der Bilderfassungsvorrichtung angeordnet ist, sowie eine Beleuchtungsvorrichtung (30), umfassend eine Drei-Wellenlängen-Lichtquelle (31 a), die dazu ausgelegt ist, Licht auszusenden, das drei Maximallichtaussendewellenlängen in separaten Wellenlängenbereichen hat, von denen jede einer Wellenlänge von einer von drei Primärfarben von Licht entspricht; wobei die Drei-Wellenlängen-Lichtquelle (31a) dazu ausgelegt ist, dass die drei Maximallichtaussendewellenlängen jeweils zu einer entsprechenden Maximaltransmissionswellenlänge von einer der drei Primärfarben des Spektralfilters (121 a) passen.

**2.** Kamerasystem nach Anspruch 1, wobei das von der Drei-Wellenlängen-Lichtquelle (31 a) ausgesandte Licht derart definiert ist, dass ein Verhältnis eines Lichtintensitätsniveaus entsprechend jeder der drei Maximallichtaussendewellenlängen zu einem Lichtintensitätsniveau entsprechend einer Minimallichtaussendewellenlänge zwischen jeder der drei Maximallichtaussendewellenlängen und benachbart der entsprechenden Maximallichtaussendewellenlänge größer oder gleich einem vorbestimmten Wert ist.

**3.** Kamerasystem nach Anspruch 2, wobei die Drei-Wellenlängen-Lichtquelle (31 a) eine weiße LED ist.

**4.** Kamerasystem nach Anspruch 2, wobei die Drei-Wellenlängen-Lichtquelle (31 a) zwei oder drei LEDs (34a, 34b, 34c) sind, von denen jede wenigstens eine der Wellenlängen der drei Primärfarben von Licht erzeugt.

**5.** Kamerasystem nach einem der Ansprüche 1 bis 4, ferner umfassend: eine Lichtquelle (35a), die von der Drei-Wellenlängen-Lichtquelle (31a) verschieden ist und die dazu ausgelegt ist, Licht auszusenden, das keine separaten Wellenlängenbereiche hat; und
eine Lichtquellen-Schalteinrichtung (101) zum selektiven Schalten zu einer von der Drei-Wellenlängen-Lichtquelle (31 a) und der Lichtquelle (35a), die das Licht aussendet, welches keine separaten Wellenlängenbereiche hat.

**6.** Kamerasystem nach einem der vorhergehenden Ansprüche, bei dem die Beleuchtungsvorrichtung (30) von der Bilderfassungsvorrichtung (121) und dem Spektralfilter (121a) trennbar ist.

**7.** Kamerasystem nach einem der Ansprüche 1 bis 5, bei dem die Beleuchtungsvorrichtung (30), die Bilderfassungsvorrichtung (121) und der Spektralfilter (121a) eine integrierte Einheit sind.

**EP 1 602 969 B1**

**Revendications**

1. Système d'appareil de prise de vues comportant un dispositif (121) de capture d'image, un filtre spectral (121a) disposé au niveau du dispositif de capture d'image, et un dispositif d'éclairage comportant une source de lumière (31a) à trois longueurs d'onde agencée pour émettre de la lumière ayant trois longueurs d'onde maximales d'émission de lumière dans des plages de longueurs d'ondes séparées correspondant chacune à une longueur d'onde de l'une de trois couleurs primaires de la lumière ;
dans lequel la source (31a) de lumière à trois longueurs d'onde est configurée de manière que lesdites trois longueurs d'onde maximales d'émission de lumière soient adaptées chacune à une longueur d'onde de transmission maximale correspondante de l'une des trois couleurs primaires du filtre spectral (121a).

2. Système d'appareil de prise de vues selon la revendication 1, dans lequel la lumière émise depuis la source (31a) de lumière à trois longueurs d'onde est définie de façon qu'un rapport d'un niveau d'intensité lumineuse correspondant à chacune des trois longueurs d'onde maximales d'émission de lumière à un niveau d'intensité lumineuse correspondant à une longueur d'onde minimale d'émission de lumière présente entre chacune des trois longueurs d'onde maximales d'émission de lumière et adjacente à la longueur d'onde maximale correspondante d'émission de lumière soit égal ou supérieur à une valeur prédéterminée.

3. Système d'appareil de prise de vues selon la revendication 2, dans lequel la source (31a) de lumière à trois longueurs d'onde est une DEL blanche.

4. Système d'appareil de prise de vues selon la revendication 2, dans lequel la source (31a) de lumière à trois longueurs d'onde est constituée de deux ou trois DEL (34a, 34b, 34c) générant chacune au moins l'une des longueurs d'onde des trois couleurs primaires de la lumière.

5. Système d'appareil de prise de vues selon l'une quelconque des revendications 1 à 4, comportant en outre :

   une source de lumière (35a) différente de la source (31a) de lumière à trois longueurs d'onde, agencée pour émettre de la lumière n'ayant pas de plages de longueur d'ondes séparées ; et
   un moyen (101) de commutation de source de lumière destiné à commuter sélectivement sur l'une de la source (31a) de lumière à trois longueurs d'onde et de la source (35a) de lumière qui émet la lumière n'ayant pas de plages de longueur d'onde séparées.

6. Système d'appareil de prise de vues selon l'une quelconque des revendications précédentes, dans lequel le dispositif d'éclairage (30) peut être détaché du dispositif (121) de capture d'image et du filtre spectral (121a).

7. Système d'appareil de prise de vues selon l'une quelconque des revendications 1 à 5, dans lequel le dispositif d'éclairage (30), le dispositif (121) de capture d'image et le filtre spectral (121) constituent une unité intégrée.

FIG.1

# FIG.2

FIG.3

# FIG.4

SPECTRAL RADIANCE CHARACTERISTICS
ACHIEVED WITH LED LIGHT SOURCE

EP 1 602 969 B1

FIG.5

# FIG.6

LIGHT RECEIVING CHARACTERISTICS
ACHIEVED IN CONJUNCTION WITH LED LIGHT SOURCE

## FIG.7

20

121a

121
IMAGE-
CAPTURING
ELEMENT

122
A/D

10

30

34b     34c

124
IMAGE
REPRODUCTION
CIRCUIT

125
DISPLAY
DEVICE

34a     31

ASIC
CPU

RECORDING MEDIUM | 126

102
RANGE FINDING
DEVICE

103
PHOTOMETERING
DEVICE

OPERATING MEMBER | 107

101

15

## FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5895128 A
- JP 10206942 A
- EP 1176849 A
- DE 10147235
- JP 2003163940 A
- US 20040090550 A